# EUROPEAN PATENT SPECIFICATION

(11) **EP 2 662 319 B1**
(45) Date of publication and mention of the grant of the patent: **08.10.2014**
(21) Application number: 13161814.2
(22) Date of filing: 28.03.2013
(51) Int. Cl.: B65G 47/08, B65G 47/90, B65G 57/22, B65B 35/58, B65B 59/02, B25J 9/00, B25J 15/02

(54) **A method and system for forming a layer of packages to be palletized**
Verfahren und System zur Zusammenstellung einer Schicht von zu palettierenden Paketen
Méthode et système d'assemblage d'une couche de paquets devant être palettisés

(30) Priority: 07.05.2012 IT PR20120027
(43) Date of publication of application: 13.11.2013
(73) Proprietor: Gea Procomac S.p.A., 43038 Sala Baganza (PR) (IT)
(72) Inventor: Bolzani, Dante, 43029 Traversetolo (PR) (IT)
(74) Representative: Gotra, Stefano

(56) References cited:
- EP-A1- 1 972 578
- WO-A1-2004/039705
- WO-A1-2010/089783
- US-A- 3 294 257

## Description

The object of the present invention is a method and a system for forming a layer of packages to be palletized.

Systems used for forming layers of packaged lots (or packages) prior to stacking them on a pallet are known.

Generally, in order to simplify transport operations, the individually packaged products are then grouped and packaged in packages having easily manoeuvrable shapes such as to optimize the space occupied. A classic example of "primary" and "secondary" packaging is found in beverage distribution, in which beverages are first packaged in bottles (or cans) and then packaged in packs comprising a predetermined number of bottles (or cans), typically six, twelve or twenty-four. The packages obtained are handled and oriented so as to form layers, which are transferred onto a pallet and stacked one over the other.

In the currently known palletization systems, the packages coming from a feed unit undergo various procedures, including selection, allotting, positioning and/or orienting according to pre-established layouts, grouping in layers and stacking of the layers.

In particular, for the purpose of reciprocally orienting the various packages, palletization systems comprise:
- a line for conveying the packages;
- a layer-preforming area, in which there is at least a movable head that moves the various packages transversely to the direction of advancement, also permitting, if required, rotation of the package about a vertical axis;
- a compaction area in which the packages are compacted along a direction of advancement and perpendicularly to the direction of advancement.

The movable head in the package-preforming area comprises a gripper equipped with two hinged arms that are operated simultaneously for gripping the package.

In particular, to grip the package, the two arms clench two opposite sides of the package that are arranged vertically and parallel to the direction of advancement of the package. At this point, the movable head is rotated by 90°.

This solution is not entirely without drawbacks related for example to the fact that in the event of an error in the positioning (for any reason) of the gripper with respect to the package, the package might be gripped improperly. Moreover, perfect synchronism is required between the rotation of the two arms of the gripper and the advancement of the package.

It is also known from WO2010/089783 a sorting apparatus with a head comprising a pair of rotatable gripping flaps.

In this context, the technical task underlying the present invention is to propose a system and a method for forming a layer of packages to be palletized that permits greater gripping precision.

The defined technical task and the specified aims are substantially achieved by a system and a method for forming a layer of packages to be palletized, comprising the technical characteristics recited in one or more of the appended claims.

Further characteristics and advantages of the present invention will become more apparent from the approximate, and thus non-limiting, description of a preferred, but not exclusive, embodiment of a system for forming a layer of packages to be palletized, as illustrated in the accompanying drawings, in which:
- Figure 1 is a plan view of a system according to the present invention;
- Figures 2 to 10 show a sequence of steps implemented by the method and by the system according to the present invention;
- Figures 11 to 19 show an additional sequence of steps implemented by the method and by the system according to the present invention.

In the accompanying figures, the reference number 1 is used to indicate a system for forming a layer of packages 10 to be palletized. This system 1 comprises a first means 5 for conveying packages. The first conveying means 5 extends along a tract 300 of a feed line 3 of the packages. The first conveying means 5 comprises/coincides with a conveyor 50, typically a belt conveyor. The tract 300 of the feed line 3 involves the portion of the feed line 3 defined by the conveyor 50. Upstream of the tract 300, the feed line 3 comprises means 7 for feeding packages to the tract 300. Downstream of the tract 300, the feed line 3 comprises means 8 for compacting the packages so as to define a layer to be palletized.

The system 1 also comprises a first gripper 2 for gripping the packages. The first gripper 2 is therefore a manipulator. The first gripper 2 (at least in an operating configuration) surmounts at least a part of the feed line 3 (particularly of the conveyor 50). The first gripper 2 is able to rotate at a pre-established angle about a vertical axis, contemporaneously with a translation along the feed line 3. This enables the rotation of the package to be performed contemporaneously with the translation, with the aim of speeding up the operations of the system 1. Therefore, the rotation of the first gripper 2 does not slow down the advancement of the package 10 along the tract 300 of the feed line 3. The first gripper 2 conveniently comprises a first and a second arm 21, 22 designed to clench at least one of the packages therebetween.

The system 1 conveniently comprises means for controlling the first gripper 2 and that permits the lowering of the first and the second arm 21, 22 at separate times so as to trap at least one of the packages therebetween. The first gripper 2 comprises in particular a first means for lowering the first arm and a second means for lowering the second arm. The first lowering means can be operated separately from the second lowering means. The first and the second lowering means can be operated independently of each other. Conveniently, the first lowering means also defines a first means for raising the first arm, whereas the second lowering means defines a second means for raising the second arm (advantageously it suffices to reverse the movement thereof). The first lowering/raising means comprises a first electric motor. The second lowering/raising means comprises a second electric motor. In analogy with the indications provided above, the first raising means can be operated separately from the second raising means. Conveniently, the first and the second lowering means are capable of determining a vertical translation of the first and the second arm 21, 22, respectively. This makes it possible to minimize the dimensions of the first and the second arm 21, 22 compared to a solution in which the first and second arms 21, 22 are hinged and thus follow a circular path.

The first arm 21 comprises a first operative surface 211 designed to come into contact with at least one of the packages and the second arm 22 comprises a second operative surface 221 designed to come into contact with at least one of the packages. A first plane parallel to the first operative surface 211 and a second plane parallel to the second operative surface 221 remain substantially parallel with respect to each other in each configuration of the first gripper 2.

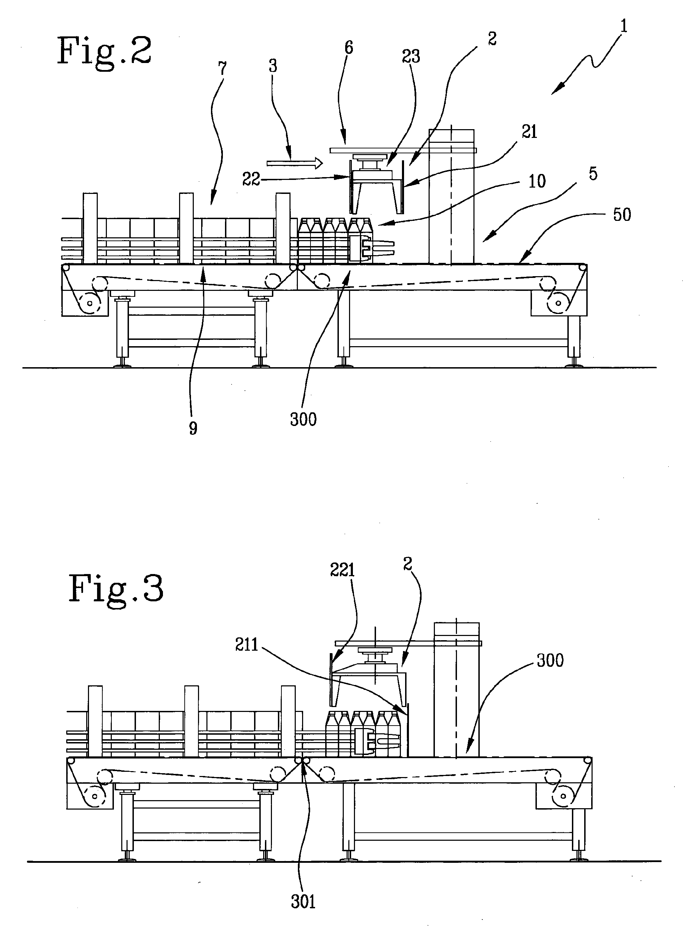

Conveniently, the first gripper 2 also comprises means for reciprocal nearing/distancing of the first and the second arm 21, 22. The means for reciprocal nearing/distancing of the first and the second arm 21, 22 can be operated independently with respect to the means for lowering the first and/or the second arm. The means for reciprocal nearing/distancing of the first and the second arm 21, 22 determine a translation of the first and the second arm 21, 22 along a horizontal direction. In the structural solution appearing in Figures 2-10, the reciprocal nearing/distancing means comprise for example an electric motor and a horizontal guide extending between the first and the second arm 21, 22.

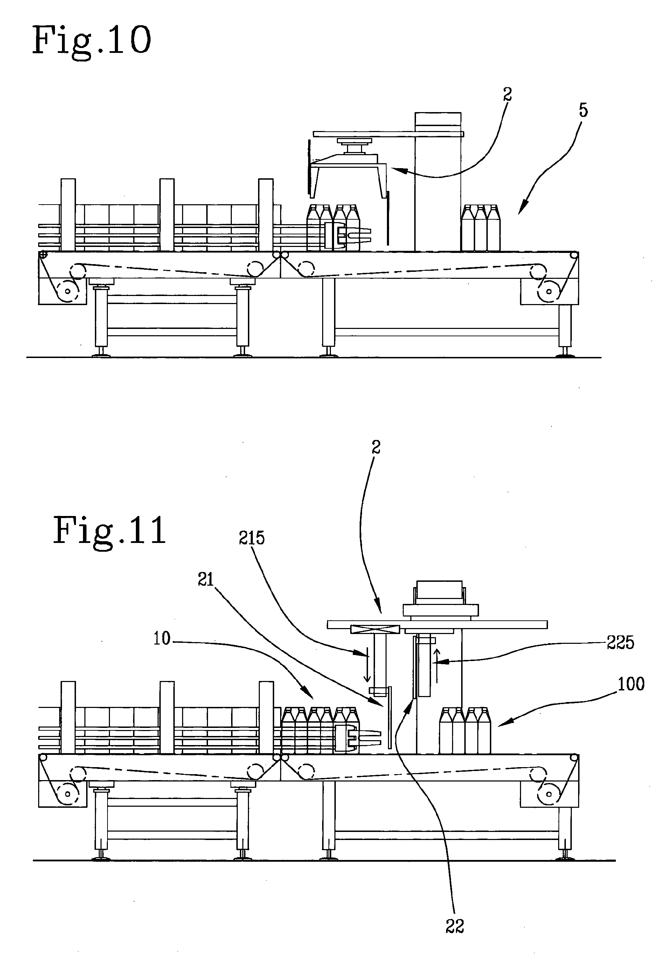

Conveniently, the first gripper 2 comprises means 23 for supporting the first and the second arm 21, 22. The first lowering means thus enables lowering of the first arm 21 with respect to the supporting means. Likewise, the second lowering means enables lowering of the second arm 22 with respect to the supporting means 23. In this regard, the supporting means 23 comprises means for guiding the first and the second arm 21, 22 which permits a vertical translation of the first and the second arm 21, 22. Conveniently, the system 1 also comprises a support 6 for the first gripper 2. The support 6 is able to translate parallel to the feed line 3 (see Figures 2-10); the first gripper 2 is also able to rotate with respect to the support 6. In this case, the support 6 and the first gripper 2 act as a slide that can move en bloc along the feed line 3. The first gripper 2 is preferably suspended from the support 6. The first gripper 2 is thus capable of translation or rotational translation en bloc, moving along the feed line 3; refer to the structural solution in Figures 11-20). The first gripper 2 comprises a first and a second guide 201, 202 that are reciprocally abreast, parallel and independent; the first arm 21 being able to slide along the first guide 201, the second arm 22 being able to slide along the second guide 202. The movement of the first arm 21 along the first guide 201 is independent of the movement of the second arm 22 along the second guide 202.

The tract 300 of the feed line 3 comprises an entry front 301 set crosswise with respect to the feed line 3.

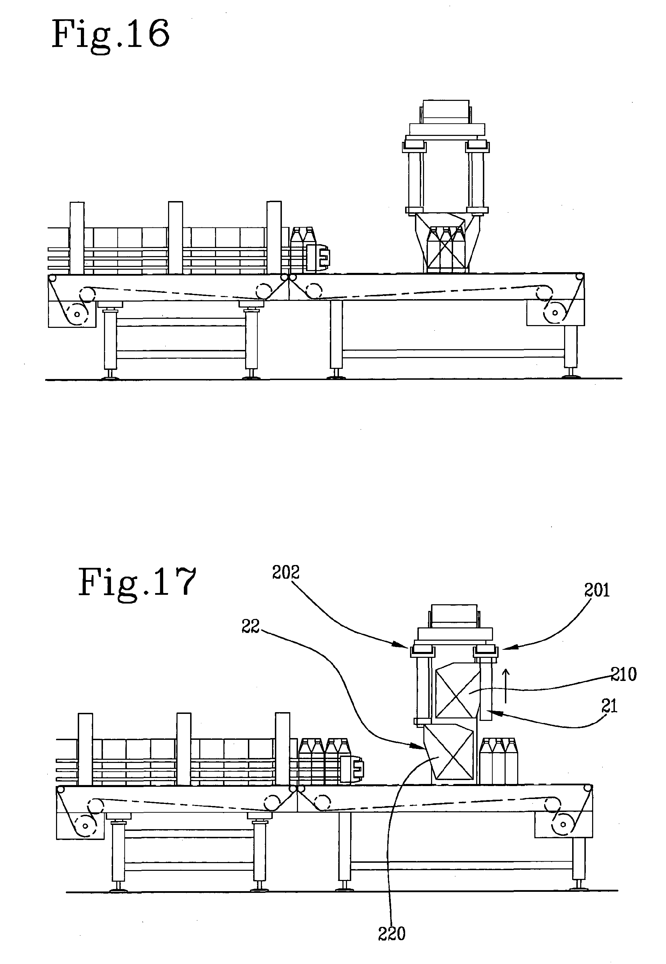

Conveniently, at least one part of the feeding means 7 can move transversely (preferably perpendicularly) to the feed line 3. In this manner, the feeding means 7 can feed the packages in different zones of the entry front 301. Advantageously, the first and the second arm 22, 22 can also move transversely to the feed line 3 or in any case, to the prevalent extension of the first conveying means 5. This operation may take place by:
- movement of the support from which the first gripper 2 (the first and second guide 201, 202 included therein) is suspended (this solution is not illustrated);
- movement of the first and the second arm 21, 22 along the first and the second guide 201, 202, when the latter are perpendicular to the feed line 3 (see Figure 16). In fact, in the solution shown in Figures11-19, the first and the second guide can be oriented with respect to the feed line 3. In particular, the first gripper 2 comprises means for rotating the first and the second guide 201, 202 about a vertical axis. More specifically, the first and the second guide 201, 202 rotate while remaining parallel to each other. Conveniently, the feeding means 7 comprises a first means 70 for metering the packages and said means 70 regulate the incoming flow of packages in the tract 300 o the feed line 3. The first metering means 70 comprises a first gate 71 located at one exit end of the feeding means 7. The first metering means 70 comprises first means for activating/stopping a conveyor belt involving at least an end part of the feeding means 7. In a first operating mode, the first gate 71 is closed and performs a restraining action as regards the packages, and in a second operating mode, it is open and permits passage of the packages.

In particular, the first gate 71 is movable along the package feed line 3 (by means of suitable motorization). During this movement, the first gate 71 may also surmount the tract 300 of the feed line 3. The system 1 comprises means for regulating advancement of the first gate 71 along the feed line 3.

The first gate 71 moves from an initial reference position by a pre-established amount. During this movement, the gate 71 performs an action of restraining at least one package. With the dimensions of the conveyed packages being known, the position of the gate 71 makes it possible to identify with maximum precision the position of the package being restrained thereby. In particular, along the package feed line 3, the first gate 71 moves at a slower velocity than the conveyor 50.

Conveniently, the first gate 71 comprises two gripping wings that can rotate about corresponding vertical axes of rotation (to permit the opening and closing of the first gate 71).

Conveniently, the system 1 also comprises a second metering means 700 comprising a second gate 72 abreast of the first gate 71. The second metering means 700 releases packages in the tract 300. In this regard, the system 1 has a second gripper 20 that moves the packages inserted in the tract 300 by the second gate 72.

Conveniently, the first and/or the second gate 71, 72 are fed by separate branches of the feeding means 7. The first and the second gate 71, 72 are movable transversely to the prevalent direction of development of the tract 300. This makes it possible to insert the packages in different zones of the entry front 301 of the tract 300.

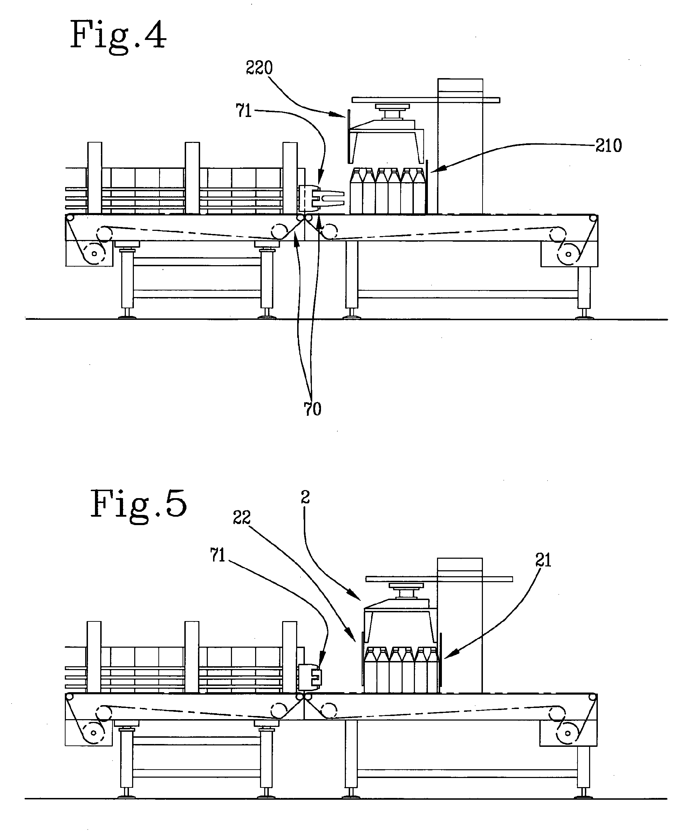

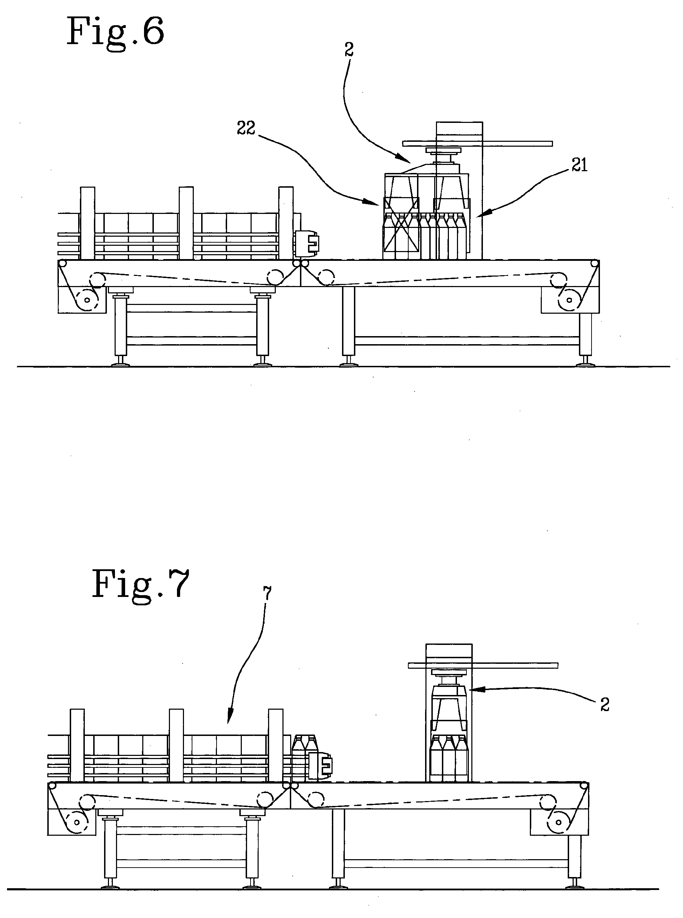

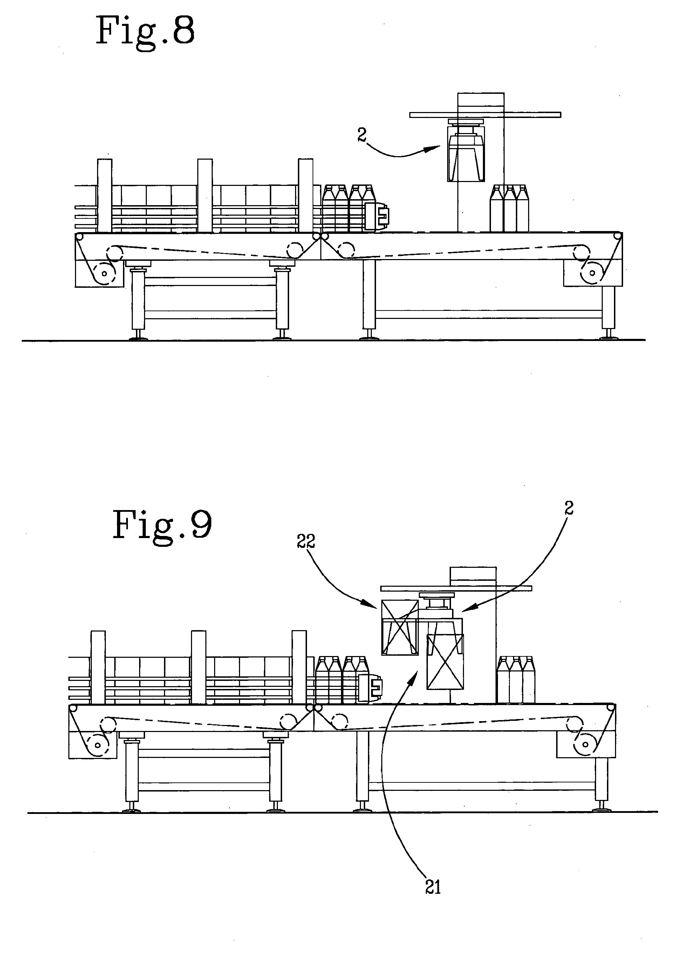

A method for forming a layer of packages to be palletized is also an object of the present invention. Conveniently, the method can be implemented by a system having one or more of the characteristics described hereinabove. The method comprises the steps of:
- translating a first 10 of said packages along a tract of a feed line 3 (see Figures 2-4 or Figures 11-13);
- gripping the first package 10 (located in said tract 300) by means of a first gripper 2 comprising a first and a second arm 21, 22 (see Figures 4-5 or Figure 14);
- moving the first and the second arm 21, 22 so as to change the orientation of the first package 10 interposed therebetween (see Figures 6 and 7 or Figures 15 and 16);
- releasing the first package 10 along the feed line 3 so as to continue the translation thereof along the feed line 3 (see Figures 8-10 or Figures 17-19). Following the step of releasing the first package 10, the latter is conveyed into a compactor where a layer of packages to be palletized is formed. Prior to the step of releasing the first package 10, the first and the second arm 22, 22 may also be moved transversely to the direction identified in the previous translation (as in Figures 11-13).

The step consisting of gripping the first package 10 comprises the steps of positioning a first grip arm 21 in front of the first package 10 with respect to the direction of advancement along the feed line 3 (Figures 3 and 4). The step of positioning a first grip arm 21 in front of the first package 10 provides for positioning the first arm 21 along a projection (preferably horizontal) of the first package 10 along the feed line 3 (preferably at a distance from the first package 10). The step for positioning the first grip arm 21 in front of the first package 10 provides for positioning an abutment surface transversely (preferably perpendicularly) to the feed line 3. This abutment surface is part of the first arm 21 and stops the first package 10 or a train of packages comprising the first package 10. This ensures that the first package cannot pass beyond the vertical projection of the first arm 21 (in fact, after that point the first package could no longer be gripped). Conveniently, the step consisting of gripping the first package 10 comprises the step of positioning a second grip arm 22 in back of the first package 10 with respect to the direction of advancement along the feed line 3 (Figure 5). The first package 10 remains interposed between the first and the second arm 21, 22. The step consisting of positioning the first arm 21 in front of the first package 10 takes place prior to the step of positioning the second arm 22 in back of the first package 10. The step of positioning the second arm 22 in back of the first package 10 provides that an imaginary projection (typically horizontal) of the second arm 22 along the feed line 3 intercepts the first package 10.

Conveniently, the step of gripping the first package 10 provides for nearing the first and the second arm 21, 22, one to the other, clenching the first package 10 therebetween (Figure 5). In the solution illustrated in Figure 5 in order to near the first and the second arm 21, 22, one to the other, only the first arm 21 is moved with respect to the means 23 for supporting the first and the second arm 21, 22 (therefore, the second arm 22 is not moved with respect to said means 23). In an alternative solution, in order to near the first and the second arm 21, 22, one to the other, both the first and the second arm 21, 22 may move with respect to the supporting means 23. To near the first and the second arm 21, 22, one to the other, the first and the second arm 21, 22 are advantageously moved parallel to the feed line 3 of the packages.

The first package 10 may conveniently be a single package that comes into contact with both the first and the second arm 21, 22, or it may be part of a group of packages that are gripped at the same time by the first gripper 2 (thus the first package 10 may also not be in contact with the first or the second arm 21 or 22).

Conveniently, the step of nearing the first and the second arm 21, 22, one to the other, begins following the step of positioning the second grip arm 22 in back of the first package 10. This makes it possible to trap the first package 10 between the first and the second arm 21, 22.

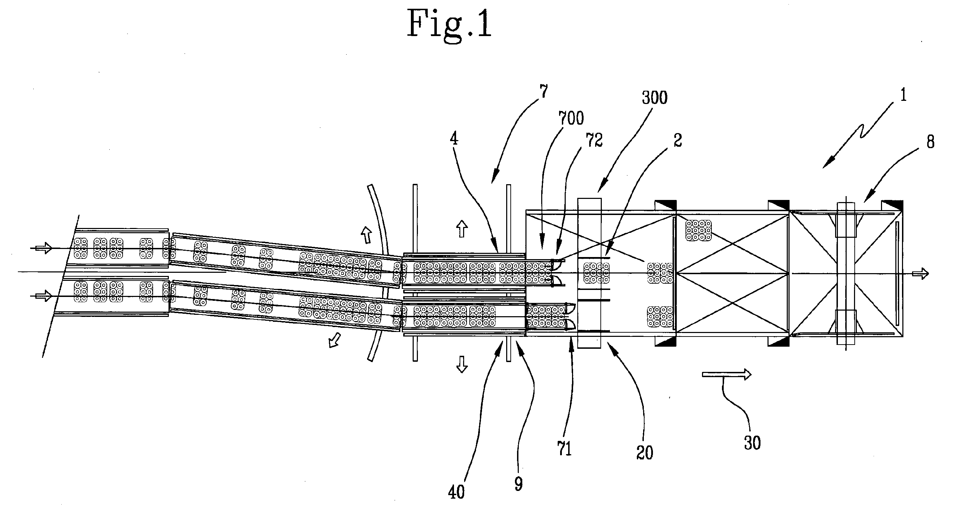

The step of moving the first and the second arm 21, 22 so as to change the orientation of the first package 10 interposed therebetween may comprise the step of performing a rotational translation of the first arm 21, the second arm 22 and the first package 10 interposed therebetween. The translational component of the rotational translation is synchronized at the same velocity and along the same shifting direction of a conveyor 50 underlying the first package 10. This solution is illustrated in Figures 1-10; in Figures 11-19, however, there would have to be provided a support from which the first gripper 2 is suspended and that can translate together with the first gripper 2 along the line 3 (unillustrated solution). This conveyor 50 is typically a conveyor belt. The step of performing a rotational translation comprises a rotational component of 90° about a vertical axis.

The step of positioning a first grip arm 21 in front of the first package 10 comprises the step of positioning a first plate 210 of the first arm 21 transversely (preferably perpendicularly) to the feed line 3 of the first package 10. The step of positioning the second grip arm 22 in back of the first package 10 comprises the step of positioning a second plate 220, which is part of the second arm 22, transversely (preferably perpendicularly) to the feed line 3 of the first package 10.

The step of nearing the first and the second arm 21, 22, one to the other, clenching the first package 10 therebetween, comprises the step of translating the first and the second plate 210, 220, nearing one to the other and keeping them vertical and parallel to the feed line 3 of the first package 10.

Conveniently, the step of releasing the first package 10 provides for distancing the first and the second plate 210, 220, one from the other, keeping them vertical and preferably parallel to the feed line 3 of the first package 10. Following the step of releasing the first package 10, the method provides for raising the first and/or the second arm 21, 22. The first and the second arm 21, 22 may or may not be raised contemporaneously (see Figure 8), as explained more fully herein below. The method further comprises the steps of inserting the first package 10 in the tract 300 of the feed line 3 by means of feeding means 7. Conveniently, the step of inserting the first package in the tract 300 comprises the step of metering the incoming packages in the tract 300 of the feed line 3 and coming from a conveyor 9 upstream.

The step of metering the packages comprises the sub-steps of:
- positioning a group of one or more packages behind a first gate 71 (conveniently located on the borderline between said conveyor 9 and said tract 300), said group coinciding with the first package 10 or alternatively comprising a plurality of adjacent packages of the same dimensions, comprising the first package 10 and placed in succession along the conveyor 9;
- advancing the first gate 71 by a preset length along the feed line 3, the preset length being equal to the length of the first package 10 along the feed line 3 (when it is found at the first gate 71) or a multiple thereof, said step taking place along with the transfer of the group in the tract 300 by means of at least the conveyor 9;
- stopping the conveyor 9;
- opening the first gate 71, releasing said group from the first gate 71;
- nearing the first gate 71 to the conveyor 9 again (preferably this comprises the repositioning of the first gate 71 between the conveyor 9 and the tract 300).

The method further comprises distancing the first gripper 2 (or more generally, the first and the second arm 21, 22) from the feeding means 7. In the solution appearing in Figures 2-10, this typically comprises a movement of the support 6 from which the first gripper 2 is suspended. In the solution appearing in Figures 11-20, this presupposes that the first and the second arm 21, 22 are distanced along corresponding guides (which support them). The presence of a support from which the first gripper is suspended and with respect to which the first gripper 2 can move would, however, be preferable. The step of distancing the first gripper 2 (or more generally, the first and the second arm 21, 22) from the feeding means 7 is at least partially contemporaneous with the step of gripping the first package 10 by means of the first gripper 2 (see Figures 4 and 5 or Figure 14) and the step of moving the first and the second arm 21, 22 so as to change the orientation of the first package 10 interposed therebetween (see Figures 6 and 7).

Conveniently, following the step of releasing the first package 10, the method comprises nearing the first gripper 2 to the feeding means 7 in order to grip another package (see Figure 10).

Conveniently, the step of inserting the first package 10 in the tract 300 of the feed line 3 by means of feeding means 7 comprises the steps of:
- moving a first distributor 4 that is part of the feeding means 7 crosswise with respect to the feed line 3 so as to choose a zone of the entry front 301 in which to channel the first package 10;
- aligning the first gripper 2 and the first package 10 along a direction 30 of advancement of the first package 10 prior to gripping the first package 10. The method advantageously provides for inserting packages in the tract 300 of the feed line 3 by means of a second distributor 40. In this case, the method comprises moving a second gripper 20 designed to grip the packages inserted by means of the second distributor 40. Conveniently, the second gripper 20 carries out one or more of the steps described hereinabove for the first gripper 2.

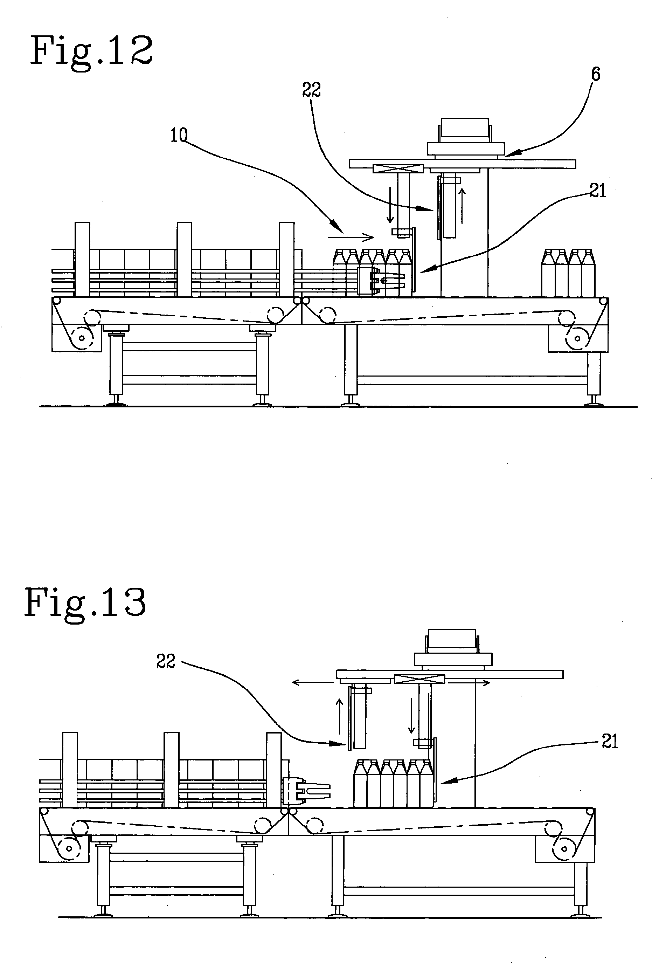

Now referring explicitly to the method implemented in Figures 11-19, note in particular that the operations illustrated in Figures 13 to 16 provide for gripping the first package 10 by means of the first gripper 2 and carrying out a change in the orientation of the first package 10. These steps are also illustrated in Figures 3 to 7. As regards the steps illustrated in Figures 11 to 13, they make it possible to speed up the operations for gripping and moving a package and in this regard, the following is specified. The step of positioning the first arm 21 in front of the first package 10 provides that the first arm 21 be upstream of the second arm 22 with respect to the direction of advancement of the first package 10 along the feed line 3. Likewise, the step of positioning the second arm 22 in back of the first package 10 provides for a step in which the second arm 22 passes over the first arm 21 so as to be positioned upstream of the first arm 21 with respect to the direction of advancement of the first package 10.

The first and the second arm 21, 22 are movable between a raised configuration of disengagement and a lowered configuration for engagement with the first package 10 or with a group of packages comprising the first package 10. In fact, with reference to Figure 11, should both the first and the second arm 21, 22 be in the raised configuration, in order to stop the first package 10 with the second arm 22 it would be necessary to:
- wait until the package that has passed previously (indicated by reference number 100 in Figure 11) is no longer beneath the second arm 22;
- have the first package 10 complete a longer route than necessary for it to abut with the first arm 21. Once the first package 10, or a group of packages including the first package 10, is abutted by the first arm 21, the second arm 22 moves toward the first package 10 and positions itself in back thereof. In fact, the second arm 22 can move faster than the first package 10; as is known, the velocity and acceleration of the first package 10 are limited by the need to avoid jeopardizing stability. At this point, the method proceeds with the gripping of the first package 10 by means of the first gripper and carrying out a change in the orientation of the first package 10 (this change in orientation is usually a rotation of 90° about a vertical axis). As illustrated in the example in Figure 13, the step in which the second arm 22 passes over the first arm 21 provides that the first arm 21 be in the lowered configuration and that the second arm 22 be in the raised configuration and pass over at least a part of the first arm 21, moving in an opposite direction with respect to the first arm 21.

In fact, the method provides that the first arm 21, in the lowered configuration, accompany the translation of the first package 10 along the direction of advancement of the first package 10 and that this step be at least partly contemporaneous to the movement of the second arm 22 (in the raised configuration) in the opposite direction.

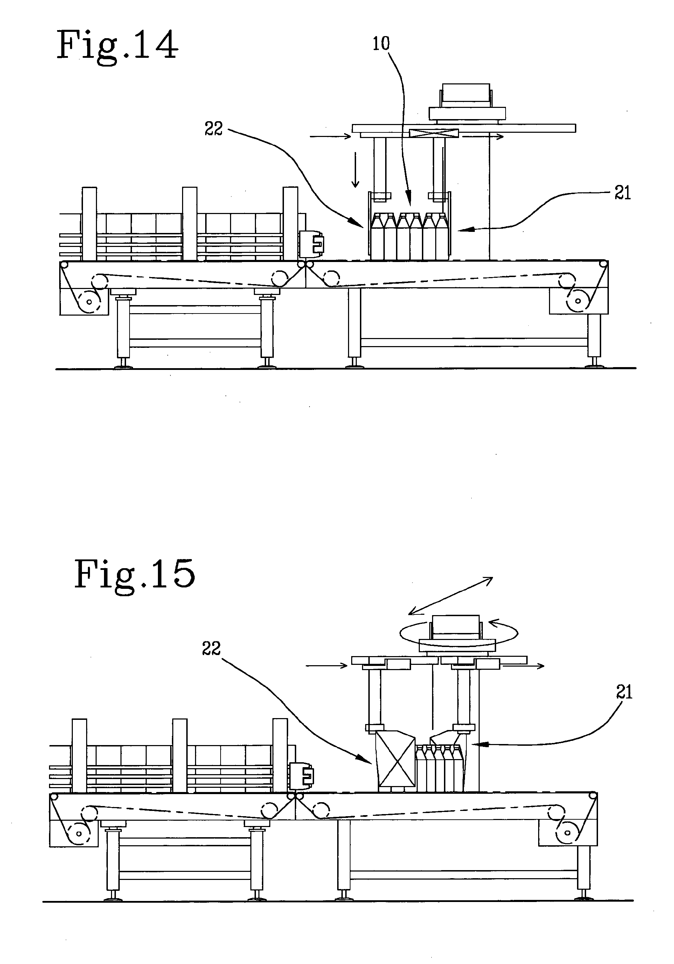

The second arm 22 is then lowered (see Figure 14) and nears the first arm 24 so as to trap the first package 10 therebetween. Advantageously, the gripper 2 comprises a first upper support 215 that supports the first arm 21 and with respect to which the first arm can translate vertically. The first upper support 215 can translate together with the first arm 21 along the feed line 3. Likewise, the gripper 2 comprises a second upper support 225 supporting the second arm 22 and with respect to which the second arm 22 can translate vertically. The second support 225 can translate together with the second arm 22 along the feed line 3. The first and the second arm 21, 22 comprise a first and a second grip plate 210, 220, respectively. Conveniently, when the first arm 21 passes over the second arm 22, the first upper and the second upper support 215, 225 are side by side, whereas a lower edge of the first plate 210 lies at a height that is higher than the upper edge of the second plate 220. The first and the second upper support 215, 225 can translate along two distinct, parallel (and preferably side-by-side) guides.

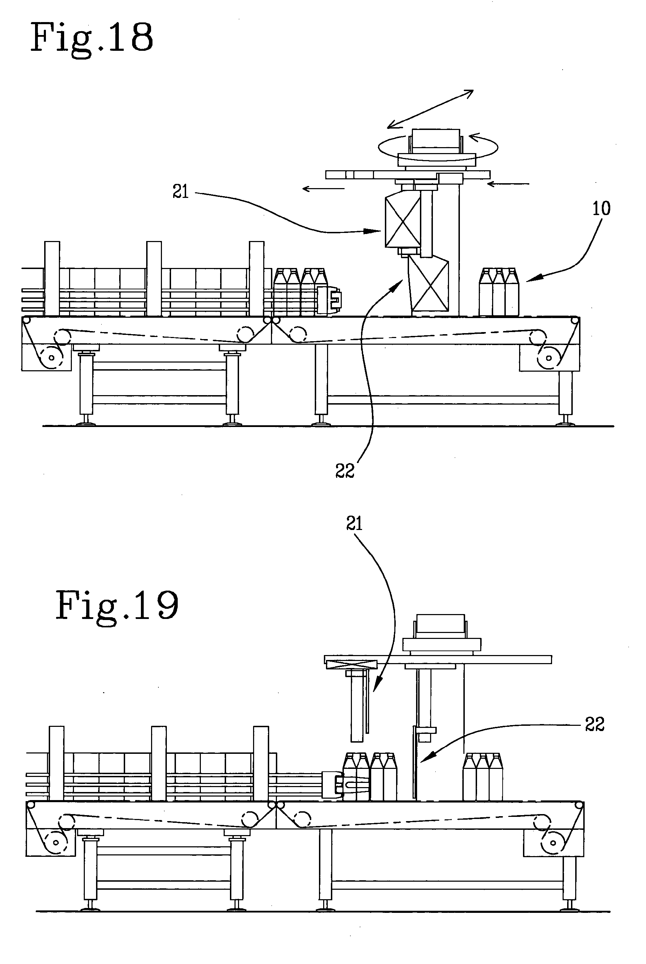

As regards Figure 18, it shows a step that is an alternative to the step shown in Figure 8 (in the latter, the first and the second arm 21, 22 are raised contemporaneously). In this regard, it is noted that following completion of the step of releasing the first package 10, the method according to the present invention provides that only one of either the first or the second arm 21, 22 can be raised, keeping the other lowered so as to abut the next package (this may be advantageous if the first package 10 just released is of dimensions that do not, in any case, obstruct rapid movement of the first gripper 2).

The invention thus conceived makes the achievement of many advantages possible.

First of all, it allows for making the package gripping operations more precise, preventing positioning errors.

The invention thus conceived is susceptible to numerous modifications and variants, all of which falling within the scope of the inventive concept characterizing the invention. Moreover, all the details may be replaced with technically equivalent elements. The materials used, as well as the dimensions, may in practice be of any type, according to requirements.

## Claims

1. A method for forming a layer of packages to be palletized, comprising the steps of:
- translating a first (10) of said packages along at least a part of one tract (300) of a feed line (3) of the first package (10);
- gripping the first package (10) by means of a first gripper (2) comprising a first and a second grip arm (21, 22);
- moving the first and second arm (21, 22) so as to change the orientation of the first package (10) interposed therebetween;
- releasing the first package (10) along the feed line (3) so as to continue the translation thereof along the feed line (3);
**characterized in that** the step of gripping the first package (10) comprises the steps of:
- positioning the first grip arm (21) in front of the first package (10) with respect to the direction of advancement along the feed line (3) in such a manner that an imaginary projection of the first package along the feed line (3) intercepts the first arm (21);
- positioning the second grip arm (22) in back of the first package (10) with respect to the direction of advancement along the feed line (3) in such a manner that an imaginary projection of the second arm (22) along the feed line (3) intercepts the first package (10), the first package (10) thus remaining interposed between the first and the second arm (21, 22); the step of positioning the first arm (21) in front of the first package (10) takes place prior to the step of positioning the second arm (22) in back of the first package (10);
- nearing the first and the second arm (21, 22), one to the other, clenching the first package (10) therebetween,
the step of positioning a first grip arm (21) in front of the first package (10) comprises the step of positioning a first plate (210) of the first arm (21) perpendicularly to the direction of advancement of the first package (10); the step of positioning the second grip arm (22) in back of the first package (10) comprises the step of positioning a second plate (220), which is part of the second arm (22), perpendicularly to the feed line (3) of the first package (10), the step of nearing the first and the second arm (21, 22), one to the other, clenching the first package (10) therebetween, comprises the step of translating the first and the second plate (210, 220), nearing one to the other and keeping them vertical and parallel to the feed line (3) of the first package (10), said plates (210, 220) remaining substantially parallel with respect to each other in each configuration of the first gripper (2).

2. The method according to claim 1, **characterized in that** the step of nearing the first and the second arm (21, 22), one to the other, begins following the step of positioning the second grip arm (22) in back of the first package (10).

3. The method according to claim 1 or 2, **characterized in that** the step of moving the first and second arm (21, 22) so as to change the orientation of the first package (10) interposed therebetween comprises the step of performing a rotational translation of the first arm (21), the second arm (22) and the first package (10) interposed therebetween; the translational component of the rotational translation being synchronized with that of a conveyor (50) underlying the first package (10) so as to have the same velocity and the same shifting direction.

4. The method according to claim 3, **characterized in that** the rotational translation comprises a rotational component of 90° about a vertical axis.

5. The method according to claim 1, **characterized in that** the step of releasing the first package (10) provides for distancing the first and the second plate (210, 220), one from the other, while keeping them vertical and parallel to the feed line (3) of the first package (10).

6. The method according to claim 1 or 5, **characterized in that** it comprises the steps of:
- moving a distributor (4) crosswise with respect to the feed line (3) so as to choose a zone of a front (301) of said tract (300) in which to channel the first package (10);
- aligning the first gripper (2) and the first package (10) along the direction (30) of advancement of the first package (10), said step taking place prior to gripping the first package (10).

7. The method according to any one of preceding claims, **characterized in that** it comprises the step of metering the incoming packages in the tract (300) of the feed line (3) and coming from a conveyor (9) upstream, the step of metering the packages comprising the sub-steps of:
- positioning a group of one or more packages behind a first gate (71) located on the borderline between said conveyor (9) and said tract (300), said group coinciding with the first package (10) or alternatively comprising a plurality of adjacent packages of the same dimensions, comprising the first package (10) and placed in succession along the conveyor (9);
- advancing the first gate (71) by a preset length along the feed line (3), the preset length being equal to the length of the first package (10) along the feed line (3) or a multiple thereof; said step taking place along with the transfer of the group in the tract (300) by means of at least the conveyor (9);
- stopping the conveyor (9);
- opening the first gate (71), releasing said group from the first gate (71);
- repositioning the first gate (71) between the conveyor (9) and the tract (300).

8. The method according to any one of the preceding claims, **characterized in that**:
- the step of positioning the first arm (21) in front of the first package (10) provides that the first arm (21) be upstream of the second arm (22) with respect to the direction of advancement of the first package (10) along the feed line (3);
- the step of positioning the second arm (22) in back of the first package (10) provides for a step wherein the second arm (22) passes over the first arm (21) so as to be positioned upstream of the first arm (21) with respect to the direction of advancement of the first package (10).

9. The method according to claim 8, **characterized in that** the first and the second arm (21, 22) are movable between a raised configuration of disengagement and a lowered configuration for engagement with the first package (10) or with a group of packages comprising the first package (10); the step wherein the second arm (22) passes over the first arm (21), provides that the first arm (21) be in the lowered configuration and that the second arm (22) be in the raised configuration and pass over at least a part of the first arm (21), moving in an opposite direction with respect to the first arm (21).

10. The method according to any one of the preceding claims, **characterized in that** following completion of the step of releasing the first package (10) and prior to gripping another package, the method provides that only one of either the first or the second arm (21, 22) is raised, keeping the other lowered so as to abut the next package.

11. A system for forming a layer of packages (10) to be palletized, comprising:
i) a first means (5) for conveying packages, the first conveying means (5) extending along a feed line (3);
ii) a first gripper (2) for gripping the packages, said first gripper (2) surmounting at least a part of the feed line and being able to rotate at a pre-established angle about a vertical axis, contemporaneously with a translation along the feed line (3), said first gripper (2) comprising a first and a second arm (21, 22) designed to clench at least one of the packages therebetween;
control means for controlling the first gripper and that permits the lowering of the first and the second arm (21, 22) at separate times so as to trap at least one of the packages therebetween,
**characterized in that** the first arm (21) comprises a first operative surface (211) designed to come into contact with at least one of the packages crosswise with respect to the feed line (3) and the second arm (22) comprises a second operative surface (221) designed to come into contact with at least one of the packages crosswise with respect to the feed line (3); a first plane parallel to the first operative surface (211) and a second plane parallel to the second operative surface (221), both remaining substantially parallel with respect to each other in each configuration of the first gripper (2).

12. The system according to claim 11, **characterized in that** the first gripper (2) comprises a first and a second guide (201, 202) that are reciprocally abreast, parallel and independent; the first arm (21) being able to slide along the first guide (201), the second arm (22) being able to slide along the second guide (202).

## Patentansprüche

1. Verfahren zur Zusammenstellung einer Schicht von zu palettierenden Paketen, umfassend folgende Schritte:
- Vorschub eines ersten (10) dieser Pakete entlang mindestens eines Teils einer Abschnitts (300) einer Zuführungslinie (3) für das erste Paket (10);
- Greifen des ersten Pakets (10) mittels eines ersten Greifers (2), umfassend einen ersten und einen zweiten Greiferarm (21, 22);
- Bewegen des ersten und des zweiten Arms (21, 22), sodass die Ausrichtung des ersten Pakets (10), das zwischen diesen angeordnet ist, geändert wird;
- Freigeben des ersten Pakets (10) entlang der Zuführungslinie (3), sodass dessen Vorschub entlang der Zuführungslinie (3) fortgesetzt wird; **dadurch gekennzeichnet, dass** der Schritt des Greifens des ersten Pakets (10) folgende Schritte umfasst:
- Positionieren des ersten Greiferarms (21) gegenüber dem ersten Paket (10) im Vergleich zur Vorschubrichtung entlang der Zuführungslinie (3), sodass ein imaginärer Vorsprung des ersten Pakets entlang der Zuführungslinie (3) den ersten Arm (21) abfängt;
- Positionieren des zweiten Greiferarms (22) hinter dem ersten Paket (10) im Vergleich zur Vorschubrichtung entlang der Zuführungslinie (3), sodass ein imaginärer Vorsprung des zweiten Arms (22) entlang der Zuführungslinie (3) das erste Paket (10) abfängt, sodass das erste Paket (10) zwischen dem ersten und dem zweiten Arm (21, 22) eingesetzt bleibt, wobei der Schritt des Positionierens des ersten Arms (21) gegenüber dem ersten Paket (10) vor dem Schritt des Positionierens des zweiten Arms (22) hinter dem ersten Paket (10) stattfindet;
- Annähern des ersten und des zweiten Arms (21, 22) aneinander, wobei das erste Paket (10) dazwischen festgespannt wird,
wobei der Schritt des Positionierens eines ersten Greiferarms (21) gegenüber dem ersten Paket (10) den Schritt des Positionierens einer ersten Platte (210) des ersten Arms (21) senkrecht zur Vorschubrichtung des ersten Pakets (10) umfasst; wobei der Schritt des Positionierens des zweiten Greiferarms (22) hinter dem ersten Paket (10) den Schritt des Positionierens einer zweiten Platte (220) umfasst, die ein Teil des zweiten Arms (22) ist, senkrecht zur Zuführungslinie (3) des ersten Pakets (10) und der Schritt des Annäherns des ersten und des zweiten Arms (21, 22) aneinander mit dem Festspannen des ersten Pakets (10) dazwischen den Schritt des Verschiebens der ersten und der zweiten Platte (210, 220) umfasst, die aneinander angenähert und vertikal und parallel zur Zuführungslinie (3) des ersten Pakets (10) gehalten werden, wobei die Platten (210, 220) in jeder Konfiguration des ersten Greifers (2) im Wesentlichen parallel zueinander angeordnet bleiben.

2. Verfahren nach Anspruch 1, **dadurch gekennzeichnet, dass** der Schritt des Annäherns des ersten und des zweiten Arms (21, 22) aneinander nach dem Schritt des Positionierens des zweiten Greiferarms (22) hinter dem ersten Paket (10) startet.

3. Verfahren nach Anspruch 1 oder 2, **dadurch gekennzeichnet, dass** der Schritt des Bewegens des ersten und des zweiten Arms (21, 22), um die Ausrichtung des ersten Pakets (10), das dazwischen eingesetzt ist, zu ändern, den Schritt des Durchführens einer Drehverschiebung des ersten Arms (21), des zweiten Arms (22) und des ersten Pakets (10), das dazwischen eingesetzt ist, umfasst; wobei die Verschiebungskomponente der Drehverschiebung mit der einer Förderung (50), die unter dem ersten Paket (10) befindlich ist, synchronisiert ist, sodass sie dieselbe Geschwindigkeit und dieselbe Verschiebungsrichtung aufweist.

4. Verfahren nach Anspruch 3, **dadurch gekennzeichnet, dass** die Drehverschiebung eine Drehkomponente von 90° um eine vertikale Achse umfasst.

5. Verfahren nach Anspruch 1, **dadurch gekennzeichnet, dass** der Schritt des Freigebens des ersten Pakets (10) für die Beabstandung der ersten und der zweiten Platte (210, 220) voneinander sorgt, während sie vertikal und parallel zur Zuführungslinie (3) des ersten Pakets (10) gehalten werden.

6. Verfahren nach Anspruch 1 oder 5, **dadurch gekennzeichnet, dass** es folgende Schritte umfasst:
- Bewegen eines Verteilers (4) quer zur Zuführungslinie (3), sodass ein Bereich einer Frontseite (301) des Abschnitts (300) gewählt wird, in den das erste Paket (10) eingeleitet wird;
- Ausrichten des ersten Greifers (2) und des ersten Pakets (10) entlang der Vorschubrichtung (30) des ersten Pakets (10), wobei dieser Schritt vor dem Greifen des ersten Pakets (10) stattfindet.

7. Verfahren nach einem der vorhergehenden Ansprüche, **dadurch gekennzeichnet, dass** es den Schritt des Messens der eingehenden Pakete im Abschnitt (300) der Zuführungslinie (3) und kommend von einer Förderung (9) stromaufwärts umfasst, wobei der Schritt des Messens der Pakete folgende Unterschritte umfasst:
- Positionieren einer Gruppe von einer oder mehreren Verpackungen hinter einer ersten Schleuse (71), befindlich an der Grenzlinie zwischen der Förderung (9) und dem Abschnitt (300), wobei diese Gruppe mit dem ersten Paket (10) übereinstimmt oder alternativ eine Vielzahl an aneinandergrenzenden Paketen derselben Größe umfasst, umfassend das erste Paket (10) und platziert nacheinander entlang der Förderung (9);
- Vorschieben der ersten Schleuse (71) um eine vorgegebene Länge entlang der Zuführungslinie (3), wobei die vorgegebene Länge gleich der Länge des ersten Pakets (10) entlang der Zuführungslinie (3) oder einem Vielfachen davon ist, wobei dieser Schritt zusammen mit der Übergabe der Gruppe im Abschnitt (300) mittels mindestens einer Förderung (9) stattfindet;
- Stoppen der Förderung (9);
- Öffnen der ersten Schleuse (71) mit der Freigabe der Gruppe aus der ersten Schleuse (71);
- erneutes Positionieren der ersten Schleuse (71) zwischen der Förderung (9) und dem Abschnitt (300).

8. Verfahren nach einem der vorhergehenden Ansprüche, **dadurch gekennzeichnet, dass**:
- der Schritt des Positionierens des ersten Arms (21) gegenüber dem ersten Paket (10) dafür sorgt, dass der erste Arm (21) vor dem zweiten Arm (22) befindlich ist im Vergleich zur Vorschubrichtung des ersten Pakets (10) entlang der Zuführungslinie (3);
- der Schritt des Positionierens des zweiten Arms (22) hinter dem ersten Paket (10) für einen Schritt sorgt, in dem der zweite Arm (22) über den ersten Arm (21) bewegt und so vor dem ersten Arm (21) positioniert wird im Vergleich zur Vorschubrichtung des ersten Pakets (10).

9. Verfahren nach Anspruch 8, **dadurch gekennzeichnet, dass** der erste und der zweite Arm (21, 22) zwischen einer angehobenen Loslösekonfiguration und einer gesenkten Konfiguration für die Verbindung mit dem ersten Paket (10) oder mit einer Gruppe von Paketen, umfassend das erste Paket (10), bewegbar ist; wobei der Schritt, in dem der zweite Arm (22) über den ersten Arm bewegt wird, dafür sorgt, dass sich der erste Arm (21) in der abgesenkten Konfiguration befindet und dass sich der zweite Arm (22) in der angehobenen Konfiguration befindet und über mindestens einen Teil des ersten Arms (21) in einer entgegengesetzten Richtung im Vergleich zum ersten Arm (21) bewegt wird.

10. Verfahren nach einem der vorhergehenden Ansprüche, **dadurch gekennzeichnet, dass** das Verfahren nach der Beendigung des Schritts zum Freigeben des ersten Pakets (10) und vor dem Greifen eines weiteren Pakets dafür sorgt, dass nur entweder der erste oder der zweite Arm (21, 22) angehoben werden, wobei der andere gesenkt beibehalten wird, sodass er am nächsten Paket anschlägt.

11. System zum Zusammenstellen einer Schicht von zu palettierenden Paketen (10), umfassend:
i) ein erstes Mittel (5) zum Fördern von Paketen, wobei sich das erste Fördermittel (5) entlang einer Zuführungslinie (3) erstreckt;
ii) einen ersten Greifer (2) zum Greifen der Pakete, wobei der erste Greifer (2) mindestens über einem Teil der Zuführungslinie angeordnet und in der Lage ist, sich bei einem vorher festgelegten Winkel um eine vertikale Achse zu drehen, und zwar gleichzeitig mit einem Vorschub entlang der Zuführungslinie (3), wobei der erste Greifer (2) einen ersten und einen zweiten Arm (21, 22) umfasst, ausgestaltet, um mindestens eins der dazwischen befindlichen Pakete festzuspannen;
Steuermittel zum Steuern des ersten Greifers, die das Senken des ersten und des zweiten Arms (21, 22) zu unterschiedlichen Zeiten ermöglichen, sodass mindestens eins der Pakete dazwischen eingeschlossen wird, **dadurch gekennzeichnet, dass** der erste Arm (21) eine erste Betriebsoberfläche (211) umfasst, ausgestaltet, um mit mindestens einem der Pakete quer im Vergleich zur Zuführungslinie (3) in Kontakt zu kommen, wobei der zweite Arm (22) eine zweite Betriebsoberfläche (221) umfasst, ausgestaltet, um in Kontakt mit mindestens einem der Pakete quer im Vergleich zur Zuführungslinie (3) zu kommen, eine erste Ebene, die parallel zur ersten Betriebsoberfläche (211) angeordnet ist, und eine zweite Ebene, die parallel zur zweiten Betriebsoberfläche (221) angeordnet ist, wobei beide im Wesentlichen in jeder Konfiguration des ersten Greifers (2) parallel zueinander bleiben.

12. System nach Anspruch 11, **dadurch gekennzeichnet, dass** der erste Greifer (2) eine erste und eine zweite Führung (201, 202) umfasst, die gegenseitig auf gleicher Höhe, parallel und voneinander unabhängig sind, wobei der erste Arm (21) in der Lage ist, entlang der ersten Führung (201) zu gleiten, und der zweite Arm (22) in der Lage ist, entlang der zweiten Führung (202) zu gleiten.

## Revendications

1. Méthode d'assemblage d'une couche de paquets devant être palettisés, comprenant les étapes de :
- déplacer un premier (10) desdits paquets le long d'au moins une partie d'une portion (300) d'une ligne d'acheminement (3) du premier paquet (10) ;
- prendre le premier paquet (10) au moyen d'un premier préhenseur (2) comprenant un premier et un second bras de préhension (21, 22) ;
- déplacer le premier et le second bras (21, 22) de manière à modifier l'orientation du premier paquet (10) interposé entre eux ;
- libérer le premier paquet (10) le long de la ligne d'acheminement (3) pour qu'il puisse poursuivre son déplacement le long de la ligne d'acheminement (3) ;
**caractérisée en ce que** l'étape de préhension du premier paquet (10) comprend les étapes de :
- positionner le premier bras de préhension (21) devant le premier paquet (10) par rapport au sens de progression le long de la ligne d'acheminement (3) de manière à ce qu'une projection imaginaire du premier paquet le long de la ligne d'acheminement (3) intercepte le premier bras (21) ;
- positionner le second bras de préhension (22) derrière le premier paquet (10) par rapport au sens de progression le long de la ligne d'acheminement (3) de manière à ce qu'une projection imaginaire du second bras (22) le long de la ligne d'acheminement (3) intercepte le premier paquet (10), le premier paquet (10) restant ainsi interposé entre le premier et le second bras (21, 22) ; l'étape de positionnement du premier bras (21) devant le premier paquet (10) ayant lieu avant l'étape de positionnement du second bras (22) derrière le premier paquet (10) ;
- rapprocher le premier et le second bras (21, 22), l'un vers l'autre, en serrant entre eux le premier paquet (10),
l'étape de positionnement d'un premier bras de préhension (21) devant le premier paquet (10) comprend l'étape de positionnement d'une première plaque (210) du premier bras (21) perpendiculairement au sens de progression du premier paquet (10) ; l'étape de positionnement du second bras de préhension (22) derrière le premier paquet (10) comprend l'étape de positionnement d'une seconde plaque (220), faisant partie du second bras (22), perpendiculairement à la ligne d'acheminement (3) du premier paquet (10), l'étape de rapprochement du premier et du second bras (21, 22), l'un vers l'autre, en serrant entre eux le premier paquet (10), comprend l'étape de déplacement de la première et de la seconde plaque (210, 220), en les rapprochant l'une de l'autre et en les maintenant verticales et parallèles à la ligne d'acheminement (3) du premier paquet (10), lesdites plaques (210, 220) restant substantiellement parallèles l'une par rapport à l'autre dans chaque configuration du premier préhenseur (2).

2. Méthode selon la revendication 1, **caractérisée en ce que** l'étape de rapprochement réciproque du premier et du second bras (21, 22) commence suite à l'étape de positionnement du second bras de préhension (22) derrière le premier paquet (10).

3. Méthode selon les revendications 1 ou 2, **caractérisée en ce que** l'étape de déplacement du premier et du second bras (21, 22), de sorte à modifier l'orientation du premier paquet (10) interposé entre eux, comprend l'étape consistant à effectuer un déplacement rotatif du premier bras (21), du second bras (22) et du premier paquet (10) interposé entre eux ; la composante de translation du déplacement rotatif étant synchronisée avec celle d'un convoyeur (50) supportant le premier paquet (10) de manière à avoir la même vitesse et le même sens de déplacement.

4. Méthode selon la revendication 3, **caractérisée en ce que** le mouvement de rotation comprend une composante de rotation de 90° autour d'un axe vertical.

5. Méthode selon la revendication 1, **caractérisée en ce que** l'étape de libération du premier paquet (10) prévoit d'éloigner réciproquement la première et la seconde plaque (210, 220) tout en les maintenant verticales et parallèles par rapport à la ligne d'acheminement (3) du premier paquet (10).

6. Méthode selon les revendications 1 ou 5, **caractérisée en ce qu'**elle comprend les étapes de :
- déplacer un distributeur (4) transversalement par rapport à la ligne d'acheminement (3) de manière à choisir une zone d'un front (301) de ladite portion (300) dans laquelle diriger le premier paquet (10) ;
- aligner le premier préhenseur (2) et le premier paquet (10) le long du sens (30) de progression du premier paquet (10), ladite étape ayant lieu avant la préhension du premier paquet (10).

7. Méthode selon l'une quelconque des revendications précédentes, **caractérisée en ce qu'**elle comprend l'étape de comptage des paquets entrant dans la portion (300) de la ligne d'acheminement (3) et provenant, en amont, d'un convoyeur (9), l'étape de comptage des paquets comprenant les sous étapes de :
- positionner un groupe d'un ou plusieurs paquets derrière une première porte (71) située à la limite entre ledit convoyeur (9) et ladite portion (300), ledit groupe coïncidant avec le premier paquet (10) ou comprenant en alternance une pluralité de paquets adjacents aux dimensions identiques, comprenant le premier paquet (10) et placés les uns à la suite des autres le long du convoyeur (9) ;
- faire avancer la première porte (71) selon une longueur prédéterminée le long de la ligne d'acheminement (3), la longueur préétablie étant équivalente à la longueur du premier paquet (10) le long de la ligne d'acheminement (3) ou à un multiple de celle-ci ; ladite étape se déroulant tout au long du transfert du groupe dans la portion (300) par le biais au moins du convoyeur (9) ;
- arrêter le convoyeur (9) ;
- ouvrir la première porte (71), libérant ledit groupe de la première porte (71) ;
- repositionner la première porte (71) entre le convoyeur (9) et la portion (300).

8. Méthode selon l'une quelconque des revendications précédentes, **caractérisée en ce que** :
- l'étape de positionnement du premier bras (21) devant le premier paquet (10) prévoit que le premier bras (21) soit en amont du second bras (22) par rapport au sens de progression du premier paquet (10) le long de la ligne d'acheminement (3) ;
- l'étape de positionnement du second bras (22) derrière le premier paquet (10) prévoit une étape dans laquelle le second bras (22) passe au-dessus du premier bras (21) de manière à se positionner en amont du premier bras (21) par rapport au sens de progression du premier paquet (10).

9. Méthode selon la revendication 8, **caractérisée en ce que** le premier et le second bras (21 , 22) sont mobiles entre une configuration redressée de dégagement et une configuration abaissée pour la mise en prise avec le premier paquet (10) ou avec un groupe de paquets comprenant le premier paquet (10) ; l'étape dans laquelle le second bras (22) passe au-dessus du premier bras (21) prévoit que le premier bras (21) soit dans la configuration abaissée et que le second bras (22) soit dans la configuration redressée et passe au-dessus d'au moins une partie du premier bras (21), en se déplaçant dans une direction opposée par rapport au premier bras (21).

10. Méthode selon l'une quelconque des revendications précédentes, **caractérisée en ce que** suite à l'accomplissement de l'étape de libération du premier paquet (10) et avant la préhension d'un autre paquet, la méthode prévoit que seul le premier ou le second bras (21, 22) soit redressé en maintenant l'autre abaissé de manière à buter contre le prochain paquet.

11. Système d'assemblage d'une couche de paquets (10) devant être palettisés, comprenant :
i) un premier moyen (5) destiner à acheminer les paquets, le premier moyen d'acheminement (5) se développant le long d'une ligne d'acheminement (3) ;
ii) un premier préhenseur (2) servant à prendre les paquets, ledit premier préhenseur (2) surmontant au moins une partie de la ligne d'acheminement et étant apte à tourner selon un angle préétabli autour d'un axe vertical en même temps qu'un déplacement le long de la ligne d'acheminement (3), ledit premier préhenseur (2) comprenant un premier et un second bras (21, 22) conçus pour serrer, entre eux, au moins un des paquets ;
un moyen de commande servant à commander le premier préhenseur et qui permet l'abaissement du premier et du second bras (21, 22) à des moments différents de manière à intercepter, entre eux, au moins un des paquets,
**caractérisé en ce que** le premier bras (21) comprend une première surface fonctionnelle (211) conçue pour venir en contact, avec au moins un des paquets, de façon transversale par rapport à la ligne d'acheminement (3) et le second bras (22) comprend une seconde surface fonctionnelle (221) conçue pour venir en contact, avec au moins un des paquets, de façon transversale par rapport à la ligne d'acheminement (3) ; un premier plan parallèle à la première surface fonctionnelle (211) ainsi qu'un second plan parallèle à la seconde surface fonctionnelle (221) demeurant tous deux substantiellement parallèles l'un par rapport à l'autre dans chaque configuration du premier préhenseur (2).

12. Système selon la revendication 11, **caractérisé en ce que** le premier préhenseur (2) comprend un premier et un second guide (201, 202) étant réciproquement côte à côte, parallèles et indépendants ; le premier bras (21) étant apte à coulisser le long du premier guide (201), le second bras (22) étant apte à coulisser le long du second guide (202).
